# EUROPÄISCHE PATENTSCHRIFT

(11) **EP 2 250 353 B1**
(45) Veröffentlichungstag und Bekanntmachung des Hinweises auf die Patenterteilung: **10.08.2011**
(21) Anmeldenummer: 09715770.5
(22) Anmeldetag: 06.02.2009
(51) Int. Cl.: F01N 3/28

(54) **WABENKÖRPER MIT VERBINDUNGSFREIEM BEREICH**
HONEYCOMB BODY WITH A CONNECTION FREE AREA
ÉLÉMENT ALVÉOLAIRE POURVU D'UNE ZONE SANS LIAISON

(30) Priorität: 27.02.2008 DE 102008011262
(43) Veröffentlichungstag der Anmeldung: 17.11.2010
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); MAUS, Wolfgang, 51429 Bergisch Gladbach (DE); HIRTH, Peter, 51503 Rösrath (DE); ALTHÖFER, Kait, 51674 Wiehl (DE)
(74) Vertreter: Rössler, Matthias
(86) Internationale Anmeldenummer: PCT/EP2009/051377
(87) Internationale Veröffentlichungsnummer: WO 2009/106416

(56) Entgegenhaltungen:
- EP-A- 0 220 468
- DE-A1-102004 058 285

## Beschreibung

Die vorliegende Erfindung betrifft einen Wabenkörper, der zumindest ein Gehäuse und eine Wabenstruktur mit einer Vielzahl von Kanälen aufweist, wobei die Wabenstruktur mit einer zumindest teilweise strukturierten metallischen Lage gebildet ist, die die Wabenstruktur fixierende Verbindungspunkte bildet. Dabei bilden höchstens 20 % der inneren Kontaktpunkte in einem Querschnitt der Wabenstruktur einen Verbindungspunkt aus. Solche Wabenkörper, die sich durch eine hohe innere Flexibilität auszeichnen, finden insbesondere Anwendung als Katalysator-Trägerkörper in Abgassystemen mobiler Verbrennungskraftmaschinen.

Wabenkörper bei der Abgasreinigung von Verbrennungskraftmaschinen, wie beispielsweise Diesel- oder Otto-Motoren, haben den Vorteil einer besonders großen Oberfläche, so dass ein sehr inniger Kontakt des ihn durchströmenden Abgasstromes an den Kanalwänden gewährleistet ist. Diese Oberfläche, die grundsätzlich von den Kanalwänden gebildet ist, wird regelmäßig mit geeigneten, gegebenenfalls verschiedenen, Katalysatoren beschichtet, um eine Konvertierung von im Abgas enthaltenen Schadstoffen zu ermöglichen.

Solche Wabenkörper können grundsätzlich aus keramischem oder metallischem Material gefertigt sein. In der letzten Zeit hat sich jedoch der metallische Katalysator-Trägerkörper besonders hervorgetan, da hier mit sehr dünnen Materialien, z. B. Blechfolien mit einer Dicke kleiner 80 µm oder sogar kleiner 50 µm, gearbeitet werden kann. Damit einher gehen eine sehr große geometrische Oberfläche und ein signifikant geringerer Druckverlust des Abgasstroms beim Durchströmen des Wabenkörpers im Vergleich zu keramischen Trägerstrukturen. Als weiterer Vorteil kann angesehen werden, dass hier gleichermaßen eine sehr einfache Anbindung an das übrige Abgassystem (z. B. Abgasrohr) ermöglicht ist, weil jeweils metallische Materialien miteinander kombiniert werden.

Eine solche Wabenstruktur ist jedoch in ihrem Lebenszyklus in einem mobilen Abgassystem einer Vielzahl unterschiedlicher Belastungen unterworfen. Dabei ist auch zu berücksichtigen, dass gerade die Superposition dieser teilweise extremen Belastungen nachhaltig die Dauerhaltbarkeit solcher Wabenkörper beeinflusst. So kann als thermische Belastung, wie beispielsweise die extremen Temperaturspitzen (bis oberhalb von 1.000°C), die beachtliche Temperaturänderungsgeschwindigkeit beim Aufheizen und Abkühlen, sowie die Temperaturverteilung des anströmenden Abgasstromes ein wesentlicher Faktor sein. Gleichermaßen gilt dies im Hinblick auf die mechanische Belastung, nämlich beispielsweise bezüglich des maximalen Beschleunigungspegels, des Frequenzbereichs der Anregung im Hinblick auf die Eigenfrequenzen sowie auch die gasdynamische Belastung durch Gaspulsation. Dies lässt erkennen, dass gerade die Verbindungsbereiche der einzelnen Komponenten (Blechfolien, Gehäuse,...) eines solchen Wabenkörpers miteinander besonders hohen Belastungen ausgesetzt sind und den sich ständig ändernden thermischen und/oder dynamischen Belastungen nach Möglichkeit sehr lange entsprechen sollten.

Es sind Verbindungstechniken bekannt, bei denen Hart-Lot (als Lotfolie, Lotpulver und/oder Lotpaste) in bestimmten Zonen eines solchen Wabenköpers positioniert wird, um die metallischen Komponenten miteinander zu verbinden. Zwischen dem Gehäuse und den Blechfolien des Wabenkörpers werden regelmäßig streifenartige, umlaufende Zonen gebildet, wobei diese sich über einen Teil oder die gesamte axiale Länge des Wabenkörpers bzw. des Gehäuses erstrecken können. Zur Verbindung der Blechfolien miteinander kann ebenfalls als bekannt angesehen werden, dass diese über den gesamten Querschnitt in einem axialen Teilbereich des Wabenkörpers miteinander verbunden sind. Zusätzlich und/oder alternativ dazu ist auch möglich, (stirnseitig gesehen) Zonen zu bilden, die eine Vielzahl von Kanälen umfassen, in denen eine Verbindung ausgeführt ist. So lassen sich stirnseitige Muster, beispielsweise nach Art von konzentrischen Ringen, Streifen, Dreiecken und dergleichen erzeugen.

Die DE 10 2004 058 285 A1 beschreibt einen Wabenkörper mit einem Gehäuse und einer Wabenstruktur mit einer Vielzahl an Kanälen und beschäftigt sich mit der Bereitstellung eines Verbindungsmaterials, das eine gezielte Positionierung von Lot zu vorgegebenen Positionen mit hoher Präzision während der Herstellung solcher metallischen Wabenkörper ermöglicht. Dazu wird ein Verbindungsmaterial vorgeschlagen, bei dem ein Lotmaterial diskontinuierlich auf einem kontinuierlichen Trägermaterial ausgebildet ist, ähnlich einem Etikett. Im Übrigen wird eine Vielzahl von Möglichkeiten angesprochen, wo solches Lotmaterial appliziert werden kann, um einen (großen) Wabenkörper zu erhalten, der ein gutes thermisches Dehnungsverhalten und eine gute Dauerhaltbarkeit aufweist.

Auch wenn zum Design eines solchen Lötbildes bereits eine Vielzahl unterschiedlicher Vorschläge gegeben hat, so können diese jedoch im Hinblick auf die Dauerhaltbarkeit nicht allen derzeit herrschenden Bedingungen am Abgassystem eines Kraftfahrzeuges standhalten. Bei der Festlegung eines Designs für ein Lötbild eines solches Wabenkörpers können eine Vielzahl von unterschiedlichen Kriterien betrachtet werden, um ausreichende Flexibilität auf der einen Seite und Dauerhaltbarkeit der Wabenstruktur auf der anderen Seite zu verwirklichen. Darüber hinaus ist bei der Herstellung eines solchen Lötbildes auch zu berücksichtigen, dass die Lötverbindungen reproduzierbar, exakt positionierbar und prozesssicher realisiert werden müssen.

Hiervon ausgehend ist es Aufgabe der vorliegenden Erfindung, die mit Bezug auf den Stand der Technik geschilderten Probleme zumindest teilweise zu lösen. Insbesondere soll ein Wabenkörper angegeben werden, der bei den extremen thermischen und dynamischen Beanspruchungen im Abgassystem eines Automobils eine deutlich verbesserte Lebensdauer hat. Dabei sollen insbesondere die Verbindungspunkte so zueinander angeordnet sein, dass ein vom Aufbau der Wabenstruktur unabhängiges Lötbild angegeben ist. Der Wabenkörper soll sich zusätzlich durch ein deutlich verbessertes Thermoschock-Verhalten und/oder ein verbessertes Schwingungsverhalten auszeichnen.

Der erfindungsgemäße Wabenkörper weist zumindest ein Gehäuse und eine Wabenstruktur mit einer Vielzahl von Kanälen auf. Die Wabenstruktur ist mit zumindest einer wenigstens teilweise strukturierten metallischen Lage gebildet, die die Wabenstruktur fixierende Verbindungspunkte bildet. Weiter bilden höchstens 20 % der inneren Kontaktpunkte in einem Querschnitt der Wabenstruktur einen Verbindungspunkt. Die Verbindungspunkte sind so zueinander beabstandet, dass ein sie umgebender verbindungsfreier Bereich jeweils gleich groß ist.

Im Hinblick auf die Anzahl der Kanäle ist bevorzugt, dass der Wabenkörper mit einer Kanaldichte pro Quadrat-Inch (cpsi) im Bereich von 100 bis 1.000, insbesondere von 200 bis 600, ausgeführt ist. Bevorzugt ist weiter, dass mehrere glatte und strukturierte (z. B. gewellte) Blechfolien zur Herstellung des Wabenkörpers eingesetzt werden. Auch wenn solche Blechfolien beispielsweise spiralförmig aufgewickelt werden können, so ist jedoch bevorzugt, dass die Blechfolien einen hiervon abweichenden Verlauf aufweisen, beispielsweise S-förmig, V-förmig, W-förmig, U-förmig oder dergleichen. Die Anordnung der Blechfolien zueinander erfolgt dann so, dass diese letztendlich gleichmäßig den (runden, ovalen oder ähnlichen) Querschnitt des Wabenkörpers ausfüllen. Diese Blechfolien sind nun an diversen Positionen miteinander (kraftschlüssig) verbunden, so genannte Verbindungspunkte. Hierbei handelt es sich bevorzugt um eine Lötverbindung, insbesondere um eine Hochtemperatur-Vakuum-Lötverbindung. Damit ist auch klar, dass sich die Verlaufsrichtung bzw. das Lötbild regelmäßig auf den fertig gestellten (gewickelten bzw. gewundenen) Wabenkörper bezieht.

Zu den Verbindungspunkten ist anzumerken, dass diese zur Fixierung der Position aneinander anliegender bzw. benachbart zueinander angeordneter Abschnitte der zumindest einen metallischen Lage dienen. Üblicherweise bilden die Lagen miteinander eine Vielzahl von Kontaktpunkten, also Stellen, an denen Abschnitte der gleichen oder verschiedener metallischer Lagen aneinander anliegen. Gerade unter Berücksichtigung der Anzahl von Kanälen, sind regelmäßig mindestens ein Kontaktpunkt, üblicherweise zwei Kontaktpunkte, pro Kanal, gebildet. Bezüglich dieser Kontaktpunkte wird nun vorgeschlagen, dass höchstens 20 % davon für einen Verbindungspunkt eingesetzt werden. Ganz besonders bevorzugt ist, dass höchstens 10 % oder sogar nur höchstens 1 % dieser inneren Kontaktpunkte in einem Querschnitt der Wabenstruktur einen Verbindungspunkt bilden. Äußere Kontaktpunkten, die einen Kontakt zwischen Wabenstruktur bzw. der metallischen Lage und dem Gehäuse aufweisen, sind hiervon nicht eingeschlossen. Daraus lässt sich erkennen, dass die Wabenstruktur im Querschnitt in radiale Richtung und/oder in Richtung des Umfangs nicht starr sondern flexibel ausgebildet ist und damit den sich ändernden thermischen Belastungen im Abgassystem einer Verbrennungskraftmaschine dauerhaft standhalten kann.

Insbesondere unabhängig vom Verlauf der wenigstens teilweise strukturierten metallischen Lage sind die Verbindungspunkte nun so über dem Querschnitt der Wabenstruktur verteilt, dass sie um sich herum jeweils einen verbindungsfreien Bereich aufweisen (den Querschnitt betrachtet). Damit ist insbesondere gemeint, dass hier keine Lötverbindungen und bevorzugt auch keine (unerwünschten) Diffusionsverbindungen ausgebildet sind. Der Bereich kann eine unterschiedliche Flächenform aufweisen, bevorzugt ist der bereich um die Verbindungspunkte in etwa kreisförmig anzusetzen. Die Größe des Bereichs ist dabei so zu wählen, dass dieser möglichst groß ist, alle über dem betrachteten Querschnitt der Wabenstruktur vorgesehenen Verbindungspunkte also mit dem größtmöglichen Abstand zueinander positioniert sind, wobei bevorzugt gleichzeitig eine gleichmäßige Verteilung der Verbindungspunkte über den Querschnitt realisiert ist. Der die Verbindungspunkte umgebende verbindungsfreie Bereich hat bevorzugt eine Fläche im Bereich von 0,5 bis 5 cm² und/oder eine Radius im Bereich von 5 bis 15 mm.

Dabei ist weiter zu berücksichtigen, dass die hier vorgeschlagene Ausprägung des Lötbildes gerade für Wabenstrukturen zu realisieren ist, die einen komplexen Aufbau aus metallischen Lagen aufweisen, die beispielsweise S-förmig gewunden sind. Hier wird trotz der besonderen Wicklung bzw. Windung der metallischen Lage zu einer Wabenstruktur eine solche Positionierung der Verbindungspunkte gewählt, dass allein die Querschnittsform und/oder die Lage der Kontaktpunkte berücksichtigt wird, der Verlauf der Lage selbst ist hier nur sekundär. Auch wenn dies gegebenenfalls zu einem höheren fertigungstechnischen Aufwand führt, nämlich gerade dann, wenn die Festlegung der Verbindungspunkte vor dem Wickeln bzw. Winden der Lage zu einer Wabenstruktur erfolgt, erlaubt die gleichmäßige Verteilung der Verbindungspunkte über den Querschnitt überraschender Weise letztendlich doch ein verbessertes thermisches Ausdehnungsverhalten der Wabenstruktur.

Gemäß einer Weiterbildung des Wabenkörpers wird vorgeschlagen, dass die Wabenstruktur mit mindestens einem Stapel aus einander abwechselnden mehreren strukturierten Blechfolien sowie glatten metallischen Lagen gebildet ist, wobei die Verbindungspunkte bei einer strukturierten Blechfolie alternierend hin zu benachbarten metallischen Lagen positioniert sind. Damit ist insbesondere gemeint, dass strukturierte Blechfolien sowie glatte Blechfolien (oder glatte Vliese, Sinterwerkstoffe etc.) abwechselnd aufeinander angeordnet werden und somit einen Stapel bilden, der anschließend so gewickelt und/oder gewunden wird, dass der Querschnitt der Wabenstruktur mit der gewünschten äußeren Form hergestellt ist. Betrachtet man nun eine einzelne strukturierte Blechfolie, so hat diese eine Oberseite und eine Unterseite, wobei sie jeweils mit der Oberseite und der Unterseite zu (anderen) metallischen Lagen Kontakt hat. Diese (inneren) Kontaktpunkte könnten zur Bereitstellung eines Verbindungspunktes herangezogen werden. Hier wird nun vorgeschlagen, dass in Richtung der strukturierten Blechfolie die Verbindungspunkte alternierend, also einmal hin zur Oberseite und einmal hin zur Unterseite, ausgebildet sind.

Darüber hinaus wird vorgeschlagen, dass die Verbindungspunkte entlang einer metallischen Lage mit verschiedenem Abstand zueinander ausgebildet sind. Das heißt mit anderen Worten, dass der Abstand hin zu allen Verbindungspunkte bevorzugt nicht konstant ist. Regelmäßig wird sich der Abstand entlang einer metallischen Lage nicht konstant verändern, also zunehmen oder abnehmen, vielmehr sind die Abstände bezüglich benachbarter Verbindungspunkte stark verschieden. In besonderen Fällen kann es auch sein, dass bezüglich einer metallischen Lage kein gleicher Abstand bezüglich der dort realisierten Verbindungspunkte erkennbar ist. Der tatsächlich anzusetzende Abstand wird zuvor rechnerisch bestimmt, wobei das erfindungsgemäße Lötbild bei der fertig gestellten Wabenstruktur letztendlich erreicht wird.

Gemäß einer Weiterbildung des Wabenkörpers wird auch vorgeschlagen, dass die Verbindungspunkte Lötpunkte sind, die anschließend zu Extrema der wenigstens teilweise strukturierten metallischen Lage ausgebildeter sind. Mit "Lötpunkte" sind insbesondere fügetechnische Verbindungen gemeint, bei denen Hartlot eingesetzt wurde. Die Lötpunkte werden also insbesondere nach einem Hochtemperatur-Vakuum-Lötverfahren hergestellt. Die von der Struktur gebildeten Extrema (Wellenberge bzw. Wellentäler) bilden letztendlich die inneren Kontaktpunkte, wobei sich die Lötpunkte daran anschließen. Ganz besonders bevorzugt ist, dass das Extrema selbst frei von Lotmaterial ist, die Lötpunkte jedoch als beidseits flankierende Lötstreifen ausgebildet sind. Ein Verbindungspunkt umfasst höchstens Lötpunkte von zwei direkt benachbarten Extrema einer Orientierung (also nur Wellenberge bzw. nur Wellentäler). Bevorzugt ist, dass ein Verbindungspunkt nur Lötpunkte zu einem einzelnen Extrema aufweist.

Darüber hinaus wird auch vorgeschlagen, dass die Verbindungsstellen nur in wenigstens einem Teilabschnitt der Erstreckung der Wabenstruktur in Richtung seiner Achse ausgebildet sind. Damit ist insbesondere gemeint, dass die Verbindungsstellen nur über einen Teil der Kanallänge ausgeführt sind. Die Erstreckung der Wabenstruktur wird regelmäßig durch deren Stirnseiten begrenzt, die den Eintritt des Abgases in bzw. den Austritt des Abgases aus der Wabenstruktur ermöglichen. Bevorzugt ist ein Teilabschnitt nahe der ersten Stirnseite und ein weiterer Teilabschnitt nahe der zweiten Stirnseite vorgesehen, der Rest der Erstreckung weist keinen Querschnitt mit Verbindungspunkten auf. Der Teilabschnitt umfasst beispielsweise 5 bis 10 mm ausgehend von einer Stirnseite.

Gemäß einer Weiterbildung des Wabenkörpers sind zwei voneinander in Richtung der Achse beabstandete Teilabschnitte vorgesehen, wobei sich die Verbindungspunkte in Richtung der Achse betrachtet überlagern. Damit ist insbesondere gemeint, dass ein Verbindungspunkt in einem ersten Teilabschnitt in Richtung der Achse bzw. entlang eines Kanals gesehen deckungsgleich zu einem anderen Verbindungspunkt im zweiten Teilabschnitt angeordnet ist. Es hat sich herausgestellt, dass eine solche Wabenstruktur stromeintrittsseitig durch positiven Thermoschock und stromaustrittsseitig durch negativen Thermoschock beansprucht wird. Das bedeutet insbesondere, dass der positive Thermoschock dort radiale Druckspannungen erzeugt, die aufgrund der verteilten Anordnung der Lötstellen beispielsweise gut durch Torsion der Blechfolien kompensiert werden können. Auf der Austrittsseite überwiegen andererseits beispielsweise radiale Zugspannungen, die ebenfalls mit dem hier vorgeschlagenen Lötbild gut kompensieren werden können. Ungeachtet dessen kann der mindestens eine axiale Teilbereich bzw. Querschnitt umfassend die Verbindungsstellen auch an anderen Positionen, z.B. im Bereich der axialen Mitte der Wabenstruktur vorgesehen sein.

Eine sichere Anbindung der hochflexiblen Wabenstruktur mit dem Gehäuse kann dadurch erreicht werden, dass die Wabenstruktur mittels aller metallischen Lagen und über die gesamte Erstreckung der Wabenstruktur mit dem Gehäuse verbunden ist. Ganz besonders bevorzugt ist, dass alle metallischen Lagen mit ihren jeweils beiden Enden an dem Gehäuse anliegend angeordnet sind und somit über die gesamte Erstreckung dieser Enden mit dem Gehäuse, bevorzugt mit einer Lötverbindung, verbunden sind.

Zum Einsparen von Lotmaterial zur Anbindung der metallischen Lagen an das Gehäuse könnte z. B. auch ein umlaufendes Streifenmuster vorteilhaft sein, bei dem also die Wabenstruktur mittels aller metallischen Lagen, aber nur einen Teil der gesamten Erstreckung der Wabenstruktur mit dem Gehäuse verbunden ist. Insbesondere können umlaufende Streifen im Bereich der Stirnseiten und/oder der axialen Mitte vorteilhaft sein, wobei bevorzugt eine Breite von 5 mm bis 10 mm vorgeschlagen wird.

Weiter wird ein Wabenkörper bevorzugt, wobei die zumindest eine wenigstens teilweise strukturierte metallische Lage mit zumindest einer Ausstülpung oder einer Öffnung ausgeführt ist. Bevorzugt ist die Ausgestaltung einer Lage als Blechfolie mit einer Vielzahl von Ausstülpungen und Öffnungen pro Kanal. Bevorzugte Ausgestaltungen sind in den Figuren gezeigt.

Besonders bevorzugt findet ein solcher Wabenkörper Einsatz in einer Abgasbehandlungseinheit, insbesondere in der eines Kraftfahrzeuges.

Besonders bevorzugte Ausführungsvarianten der Erfindung sowie das technische Umfeld werden nun anhand der Figuren näher erläutert. Es ist darauf hinzuweisen, dass die in den Figuren gezeigten Ausführungsbeispiele die Erfindung nicht beschränken sollen. Es zeigen schematisch:
- Fig. 1:: ein Kraftfahrzeug mit einem Abgassystem,
- Fig. 2:: einen Längsschnitt durch eine Ausführungsvariante eines Wabenkörpers,
- Fig. 3:: einen Querschnitt einer Ausführungsform eines erfindungsgemäßen Wa- benkörpers,
- Fig. 4:: ein erstes Detail eines Stapels für einen erfindungsgemäßen Wabenkör- per,

- Fig. 5:: ein weiteres Detail einer anderen Ausführungsvariante eines Stapels für einen Wabenkörper, und
- Fig. 6:: ein Beispiel für eine strukturierte metallische Lage.

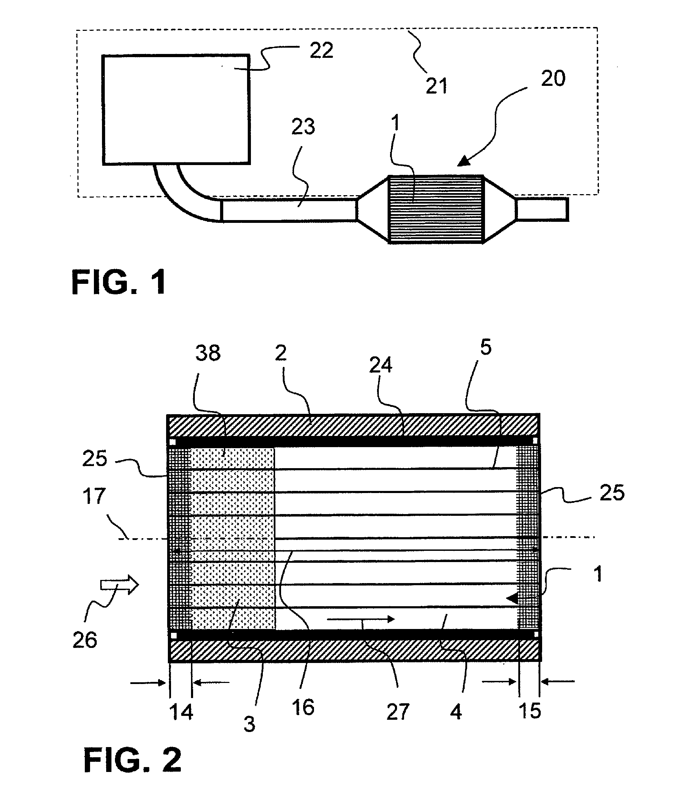

Die Fig. 1 veranschaulicht schematisch den Aufbau eines mobilen Abgassystems für ein Kraftfahrzeug 21. Das Kraftfahrzeug 21 hat eine Verbrennungskraftmaschine 22, beispielsweise einen Otto- oder Dieselmotor. Der dort verwandte Brennstoff wird als Abgas durch eine entsprechende Abgasleitung 23 hin zu einer Abgasbehandlungseinheit 20 gerührt. Dort werden die im Abgas enthaltenen Schadstoffe zumindest teilweise konvertiert und/oder zurückgehalten, so dass schließlich nur noch relativ unschädliche Abgaskomponenten in die Umgebung strömen. Es ist offensichtlich, dass die Anzahl, Art und/oder Position solcher Abgasbehandlungseinheiten 20 in einem solchen Abgassystem in vielerlei Hinsicht variiert werden kann, folglich wird hier nur exemplarisch eine mögliche Ausgestaltung für einen erfindungsgemäßen Wabenkörper 1, der dort in der Abgasleitung 23 veranschaulicht ist, dargestellt.

Der Aufbau eines Wabenkörpers 1 geht beispielsweise aus der Fig. 2 hervor. Fig. 2 ist ein Längsschnitt durch einen (runden) Wabenkörper 1 entlang seiner Achse 17. Der Wabenkörper 1 ist außen begrenzt mit einem Gehäuse 2, das insbesondere als metallisches Rohr ausgeformt ist. Im Inneren des Gehäuses 2 ist die Wabenstruktur 3 mit einer Vielzahl von Kanälen 4 gebildet. Die (separaten, voneinander zumindest teilweise getrennten) Kanäle 4 erstrecken sich zwischen den beiden Stirnseiten 25 und sind im Wesentlichen parallel zueinander angeordnet. Die Kanäle 4 verlaufen dabei im Wesentlichen auch parallel zur Achse 17. Dies ist aber nicht zwingend erforderlich. Auch müssen die Kanalwände nicht gradlinig verlaufen, es können auch in Richtung der Achse 17 weisende Profilierungen z. B. Leitflächen und/oder benachbarte Kanäle 4 verbindende Öffnungen vorgesehen sein.

Die Kanäle 4 der Wabenstruktur 3 sind regelmäßig mit einer katalytisch aktiven Beschichtung 38 versehen, die teilweise - wie hier gezeigt - oder über die gesamte Erstreckung 16 der Wabenstruktur 3 vorgesehen sein kann. Das hier letztendlich in der Strömungsrichtung 26 durchströmende Abgas wird so mit dem Katalysator in Kontakt gebracht, der eine Konvertierung der Schadstoffe im Abgas unterstützt. Zu diesem Zweck können in bzw. mit den Kanälen 4 Verwirbelungsstellen und/oder Beruhigungszonen vorgesehen sein, die die Kontaktierung des Abgases mit der Kanalwand verbessern.

Zwischen der Wabenstruktur 3 und dem Gehäuse 2 ist nun eine Mantelverbindung 24 (bevorzugt als Lotverbindung) ausgeführt, und diese erstreckt sich im Wesentlichen über die gesamte Erstreckung 16 der Wabenstruktur 3. Damit wird insbesondere gewährleistet, dass alle zum Aufbau der Wabenstruktur 3 vorgesehenen Blechfolien bzw. metallischen Lagen sicher mit dem Gehäuse 2 verbunden sind.

Nahe den beiden Stirnseiten 25 ist jeweils schraffiert der axiale Bereich der Wabenstruktur veranschaulicht, in dem der Querschnitt mit Verbindungspunkten ausgeführt ist. Klarzustellen ist, dass (auch wenn hier der gesamte Bereich schraffiert ist) dort die Verbindungspunkte nur jeweils weit entfernt und ggf. versetzt zueinander angeordnet sind. Die Verbindungspunkte erstrecken sich dabei an einer Stirnseite 25 über einen ersten Teilabschnitt 14 bzw. zweiten Teilabschnitt 15 mit einer maximalen Weiten von höchstens 15 mm, bevorzugt aber von maximal 5 mm.

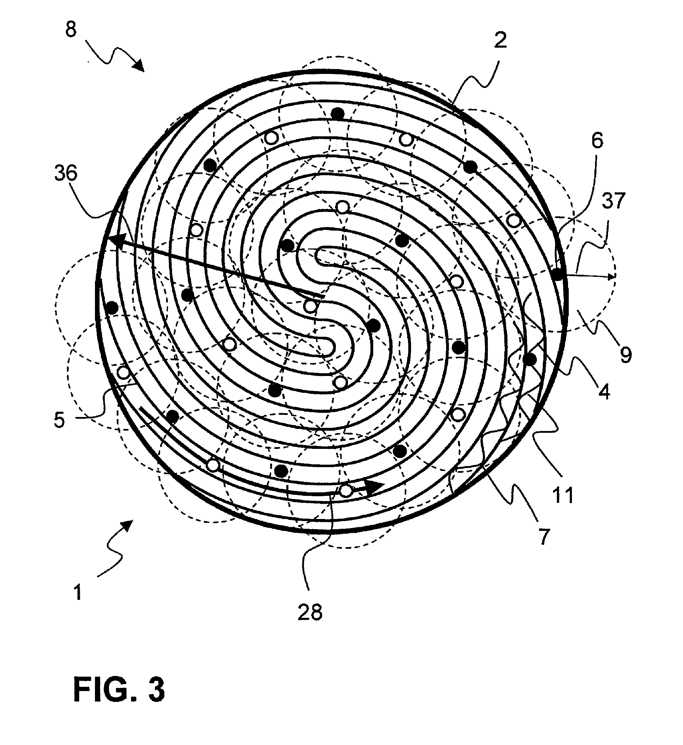

In Fig. 3 ist ein Querschnitt durch einen Wabenkörper 1 dargestellt, in dem die Verbindungspunkte 6 ausgebildet sind. Dargestellt ist das Gehäuse 2, in dem, hier S-förmig gewunden, mehrere glatte metallische Lagen 5 sowie strukturierte Blechfolien 11 abwechselnd so angeordnet und gewunden positioniert sind, dass der gesamte Querschnitt 8 innerhalb des Gehäuses 2 ausgefüllt ist. Die aneinander anliegenden glatten Lagen 5 und strukturierten bzw. gewellten Blechfolien 11 bilden die Kanäle 4 aus. In der Darstellung in Fig. 3 wurde für eine einzelne Lage 5 exemplarisch die Anordnung von Verbindungspunkten 6 veranschaulicht. Durch die unterschiedliche Farbe der Verbindungspunkte 6 soll veranschaulicht werden, dass die Verbindungspunkte 6 in Verlaufsrichtung 28 der Lage 5 abwechselnd hin zur Oberseite bzw. zur Unterseite ausgeführt sind. Deshalb wechseln sich die farblichen Markierungen (hell, dunkel) der Verbindungspunkte 6 in Verlaufsrichtung 28 ab. Um jeden Verbindungspunkt 6 ist zudem der verbindungsfreie Bereich 9 mit einem gestrichelten Kreis veranschaulicht. Hier weist jeder verbindungsfreie Bereich 9 die gleiche Ausdehnung 37 auf, dies ist aber nicht zwingend erforderlich. Bei dem hier gezeigten Querschnitt 8 kann erkannt werden, dass die Häufigkeit der Verbindungspunkte 6 in einem Referenzsegment gleich ist bzw. die Verteilung der Verbindungspunkte 6 über den Radius 36 der Wabenstruktur 3 bzw. über den Querschnitt 8 sehr gleichmäßig ist.

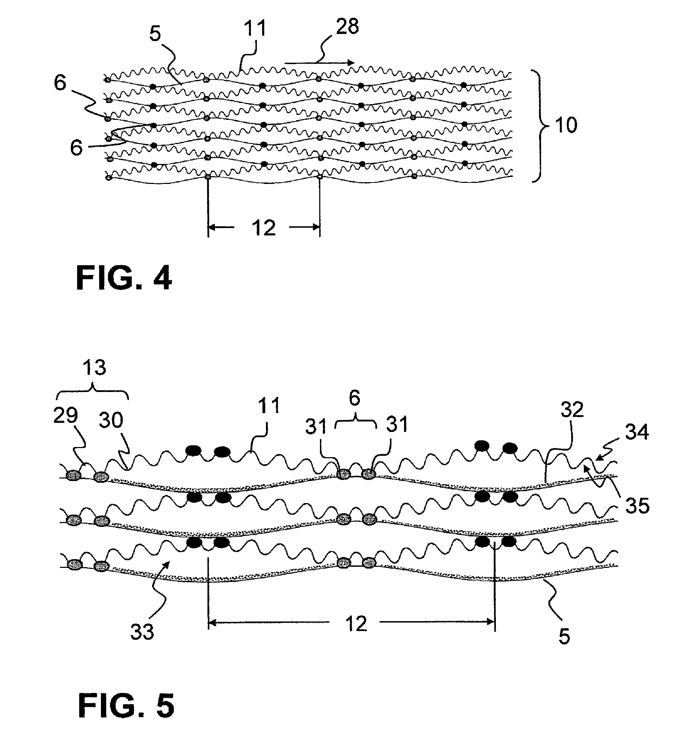

In Fig. 4 ist ein Stapel 10 mit einer Mehrzahl strukturierter Blechfolien 11 und glatten Lagen 5 (z. B. ebenfalls Blechfolien oder metallische Vliese) gezeigt. Der Stapel 10 ist hierbei in einem noch ungewundenen Zustand dargestellt, hat also wesentlich eine geradlinige Verlaufsrichtung 28. Mit unterschiedlichen Farbgebungen sind zudem die Verbindungspunkte 6 der Blechfolien zueinander dargestellt. Infolge der Tatsache, dass die Ausbildung solcher Verbindungspunkte 6 (Lötverbindungen) erst im montierten Zustand, also im gewundenen Zustand im Inneren des Gehäuses, ausgebildet werden, veranschaulicht die Fig. 4 insbesondere die Positionen für ein Haftmittel, an dem nach dem Wickelvorgang beispielsweise pulverförmiges Lot positioniert wird, welches letztendlich zur Ausbildung der hier exemplarisch und veranschaulichend dargestellten, bezogen auf die strukturierte Blechfolie 11 oberseitige Verbindungspunkte (hier dunkel markiert) und unterseitige Verbindungspunkte (hier hell markiert) generiert. Unten in Fig. 4 ist gezeigt, dass die gleichartigen, unterseitigen Verbindungspunkte, hier also hin zur unteren glatten Lage 5, den angegebenen Abstand 12 in Verlaufsrichtung 28 von z. B. mindestens 20 mm einhalten. Bei dem hier vorgeschlagenen Lötbild des fertigen Wabenkörpers ist regelmäßig davon auszugehen, dass die zueinander benachbarten Verbindungspunkte keinen konstanten Abstand 12 in Verlaufrichtung 28 des fertigen Wabenkörpers 1 haben.

Fig. 5 zeigt nun eine Variante, wobei jeder Verbindungspunkt mit zwei Lotpunkten 31 an benachbarten Strukturextrema 13, also entweder einer Erhebung 29 oder ein Senke 30, ausgebildet ist. Zwischen den Verbindungspunkten 6 sind eine Vielzahl von Extrema 13 der Struktur der strukturierten Blechfolie 11 vorgesehen. Nur sei an dieser Stelle darauf hingewiesen, dass üblicherweise die Anzahl der Strukturextrema 13 zwischen den gleichartigen (gleichfarbig dargestellt) Verbindungsstellen in Verlaufsrichtung normalerweise deutlich höher ist als das hier exemplarisch dargestellt ist, insbesondere liegen mindestens 15 Strukturextrema dazwischen.

Darüber hinaus lässt sich aus Fig. 5 erkennen, dass die glatten Lagen 5 mit einer Verbindungsbehinderungsschicht 32 ausgeführt sind. Auch wenn diese bevorzugt an der Oberseite 34 und der Unterseite 35 der glatten Lagen 5 (insbesondere Blechfolien) vorgesehen ist, kann in Ausnahmesituationen auch eine einseitige Bereitstellung einer Oxidschicht genügen. Jedenfalls soll so auch gewährleistet werden, dass eine Anbindung der metallischen Lagen, beispielsweise infolge einer Diffusion, vermieden wird und sich folglich unter Beanspruchung relativ große Zellen 33 ausbilden können. Mit anderen Worten kann also als Bildungsgesetz festgehalten werden, dass eine solche Zelle 33 beispielsweise mit einem Abschnitt einer glatten Lage 5 und einem Abschnitt einer strukturierten Blechfolie 11 gebildet ist, wobei die Zelle 33 über zwei gleichartige Verbindungspunkte (hier für unterseitige Verbindungspunkte gezeigt) begrenzt ist und weiter die Zellenbegrenzung mittels der strukturierten Blechfolie 11 mit mindestens 15 Strukturextrema 13 gebildet ist. Damit wird eine besonders starke Verformbarkeit der Zelle 33 bzw. flexible Anordnung der benachbarten Blechfolien realisiert, und zwar einerseits in Verlaufsrichtung 28 und auch quer dazu.

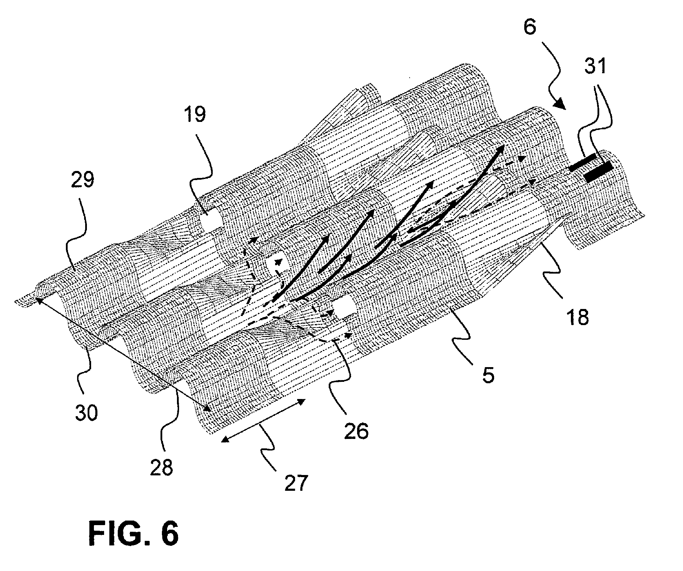

Fig. 6 veranschaulicht eine besonders bevorzugte Ausführungsvariante einer strukturierten Lage 5 bzw. einer strukturierten Blechfolie 11, für die die Erfindung in besonderem Maße Anwendung finden kann. Der komplexe Aufbau der Lage 5 mit einer sich in Verlaufsrichtung 28 regelmäßig wiederholenden Anordnung von Erhebungen 29 und Senken 30 (Wellenform), die damit die Kanalerstreckungsrichtung 27 bestimmen, einerseits und die Integration von abwechselnd nach oben und unten weisenden Ausstülpungen 18 andererseits, erlaubt eine wiederholte Umlenkung bzw. Verwirbelung des die Kanäle entlang strömenden Abgases, so dass sich immer wieder neue Strömungsfäden bilden können (angedeutet durch die Pfeile der diversen Strömungsrichtungen 26). Infolge der Ausstülpungen 18, Öffnungen 19, Erhebungen 29 und Senken 30 der zumeist sehr dünnen Lage 5 sind sehr starre Verbindungen im Inneren des Wabenkörpers zu vermeiden, was nun hier mit dem vorgeschlagenen Lötbild erreicht werden kann. Beispielhaft ist für eine Erhebung 29 ein Verbindungspunkt 6 veranschaulicht. Dieser besteht aus zwei neben dem Scheitelpunkt der Erhebung 29 platzierten Lotpunkten 31, die hier streifenförmig und parallel zur Erhebung 29 ausgebildet sind. Ein solcher Verbindungspunkt 6 lässt sich insbesondere dadurch herstellen, dass ein Haftmittel im Bereich der Lotpunkte 31 aufgetragen (bzw. aufgedruckt) wird, die Lagen dann zur Wabenstruktur angeordnet werden, Lotpulver durch die Kanäle über die Stirnseite zu dem Haftmittel zugeführt wird und das daran haftende Lotmaterial letztendlich einen Verbindungspunkt 6 nach einer thermischen Behandlung der Wabenstruktur ausbildet.

### Bezugszeichenliste

- 1: Wabenkörper
- 2: Gehäuse
- 3: Wabenstruktur
- 4: Kanal
- 5: metallischen Lage
- 6: Verbindungspunkt
- 7: Kontaktpunkt
- 8: Querschnitt
- 9: verbindungsfreier Bereich
- 10: Stapel
- 11: Blechfolien
- 12: Abstand
- 13: Extremum der Struktur
- 14: erster Teilabschnitt
- 15: zweiter Teilabschnitt
- 16: Erstreckung
- 17: Achse
- 18: Ausstülpung
- 19: Öffnungen
- 20: Abgasbehandlungseinheit
- 21: Kraftfahrzeug
- 22: Verbrennungskraftmaschine
- 23: Abgasleitung
- 24: Mantelverbindung
- 25: Stirnseite
- 26: Strömungsrichtung
- 27: Kanalerstreckungsrichtung

- 28: Verlaufsrichtung
- 29: Erhebung
- 30: Senke
- 31: Lotpunkt
- 32: Verbindungsverhinderungsschicht
- 33: Zelle
- 34: Oberseite
- 35: Unterseite
- 36: Radius
- 37: Ausdehnung
- 38: Beschichtung

## Patentansprüche

1. Wabenkörper (1) zumindest aufweisend ein Gehäuse (2) und eine Wabenstruktur (3) mit einer Vielzahl von Kanälen (4), wobei die Wabenstruktur (3) mit zumindest einer wenigstens teilweise strukturierten metallischen Lage (5) gebildet ist, die die Wabenstruktur (3) fixierende Verbindungspunkte (6) bildet, **gekennzeichnet dadurch, dass** höchstens 20 % der inneren Kontaktpunkte (7) in einem Querschnitt (8) der Wabenstruktur (3) einen Verbindungspunkt (6) bilden, und die Verbindungspunkte (6) so zueinander beabstandet sind, dass ein sie umgebender verbindungsfreier Bereich (9) jeweils gleich groß ist.

2. Wabenkörper (1) nach Patentanspruch 1, wobei die Wabenstruktur (3) mit mindestens einem Stapel (10) aus einander abwechselnden mehreren strukturierten Blechfolien (11) sowie glatten metallischen Lagen (5) gebildet ist, wobei die Verbindungspunkte (6) bei einer strukturierten Blechfolie (11) alternierend hin zu benachbarten metallischen Lagen (5) positioniert sind.

3. Wabenkörper (1) nach Patentanspruch 1 oder 2, wobei die Verbindungspunkte (6) entlang einer metallischen Lage (5) mit verschiedenem Abstand (12) zueinander ausgebildet sind.

4. Wabenkörper (1) nach einem der Patentansprüche 1 bis 3, wobei die Verbindungspunkte (6) Lötpunkte sind, die anschließend zu Extrema (13) der wenigstens teilweise strukturierten metallischen Lage (5) ausgebildet sind.

5. Wabenkörper (1) nach einem der Patentansprüche 1 bis 4, wobei die Verbindungsstellen (6) nur in wenigstens einem Teilabschnitt (14) der Erstreckung (16) der Wabenstruktur (3) in Richtung seiner Achse (17) ausgebildet sind.

6. Wabenkörper (1) nach Patentanspruch 5, wobei zwei voneinander in Richtung der Achse (17) beabstandete Teilabschnitte (14, 15) vorgesehen sind, wobei die Verbindungspunkte (6) sich in Richtung der Achse (17) betrachtet überlagern.

7. Wabenkörper (1) nach einem der Patentansprüche 1 bis 6, wobei die Wabenstruktur (3) mittels aller metallischen Lagen (5) und über die gesamte Erstreckung (16) der Wabenstruktur (3) mit dem Gehäuse (2) verbunden ist.

8. Wabenkörper (1) nach einem der Patentansprüche 1 bis 7, wobei die zumindest eine wenigstens teilweise strukturierte metallische Lage (5) mit zumindest einer Ausstülpung (18) oder einer Öffnung (16) ausgeführt ist.

9. Abgasreinigungseinheit (20) aufweisend zumindest einen Wabenkörper (1) nach einem der Patentansprüche 1 bis 8.

10. Kraftfahrzeug (21) aufweisend zumindest eine Abgasbehandlungseinheit (20) nach Patentanspruch 9.

## Claims

1. Honeycomb body (1) at least having a housing (2) and a honeycomb structure (3) comprising a multiplicity of channels (4), wherein the honeycomb structure (3) is formed with at least one at least partially structured metallic layer (5) which forms connecting points (6) for fixing the honeycomb structure (3), **characterized in that** at most 20% of the inner contact points (7) in a cross section (8) of the honeycomb structure (3) forming a connecting point (6), and the connecting points (6) are spaced apart from one another such that a surrounding connection-free region (9) is of in each case equal size.

2. Honeycomb body (1) according to patent claim 1, wherein the honeycomb structure (3) is formed with at least one stack (10) composed of a plurality of alternating structured sheet-metal foils (11) and smooth metallic layers (5), wherein the connecting points (6) on a structured sheet-metal foil (11) are positioned in an alternating fashion to adjacent metallic layers (5).

3. Honeycomb body (1) according to patent claim 1 or 2, wherein the connecting points (6) along a metallic layer (5) are formed with different spacings (12) to one another.

4. Honeycomb body (1) according to one of patent claims 1 to 3, wherein the connecting points (6) are brazing points which are formed adjacent to extrema (13) of the at least partially structured metallic layer (5).

5. Honeycomb body (1) according to one of patent claims 1 to 4, wherein the connecting points (6) are formed only in at least one partial section (14) of the extent (16) of the honeycomb structure (3) in the direction of the axis (17) thereof.

6. Honeycomb body (1) according to patent claim 5, wherein two partial sections (14, 15) are provided which are spaced apart from one another in the direction of the axis (17), wherein the connecting points (6) overlap each another as viewed in the direction of the axis (17).

7. Honeycomb body (1) according to one of patent claims 1 to 6, wherein the honeycomb structure (3) is connected to the housing (2) by means of all the metallic layers (5) and over the entire extent (16) of the honeycomb structure (3).

8. Honeycomb body (1) according to one of patent claims 1 to 7, wherein the at least one at least partially structured metallic layer (5) is provided with at least one protuberant portion (18) or one opening (16).

9. Exhaust-gas purification unit (20) having at least one honeycomb body (1) according to one of patent claims 1 to 8.

10. Motor vehicle (21) having at least one exhaust-gas purification unit (20) according to patent claim 9.

## Revendications

1. Corps en nids d'abeilles (1) au moins pourvu d'un boîtier (2) et d'une structure en nids d'abeilles (3) avec une multiplicité de canaux (4), la structure en nids d'abeilles (3) étant formée avec au moins une couche métallique, au moins partiellement structurée (5), qui forme des points de liaison (6) fixant la structure en nids d'abeilles (3), **caractérisé en ce qu'**au maximum 20 % des points de contact internes (7) forment un point de liaison (6) et les points de liaison (6) sont espacés de manière telle l'un de l'autre que leur domaine (9) les entourant et exempt de liaisons a respectivement la même taille.

2. Corps en nids d'abeilles (1) selon la revendication 1, la structure en nids d'abeilles (3) étant formée avec au moins une pile (10) de plusieurs feuilles de tôle structurées (11) ainsi qu'avec des couches lisses métalliques (5) s'alternant, les points de liaison (6), quant à une feuille de tôle structurée (11), étant positionnés vers des couches métalliques adjacentes (5).

3. Corps en nids d'abeilles (1) selon la revendication 1 ou 2, les points de liaison (6) le long d'une couche métallique (5) étant réalisés avec une distance (12) différente les uns des autres.

4. Corps en nids d'abeilles (1) selon l'une des revendications 1 à 3, les points de liaison (6) étant des points de brasage, qui ensuite sont formées en extrema (13) de la couche (5) au moins partiellement structurée.

5. Corps en nids d'abeilles (1) selon l'une des revendications 1 à 4, les points de liaison (6) n'étant façonnés qu'au moins dans une section partielle (14) de l'étendue (16) de la structure en nids d'abeilles(3) en direction de son axe (17).

6. Corps en nids d'abeilles (1) selon la revendication 5, deux sections partielles (14, 15) espacées l'une de l'autre en direction de l'axe (17) étant prévues et les points de liaison (6) vu en en direction de l'axe (17), se superposent.

7. Corps en nids d'abeilles (1) selon l'une des revendications 1 à 6, la structure en nids d'abeilles (3) étant reliée au boîtier (2) au moyen de toutes les couches métalliques (5) et sur l'entière étendue (16) de la structure en nids d'abeilles (3).

8. Corps en nids d'abeilles (1) selon l'une des revendications 1 à 7, l'au moins une couche métallique (5), au moins partiellement structurée est réalisée avec au moins une protubérance (18) ou une ouverture (16).

9. Unité d'épuration de gaz d'échappement (20) ayant au moins un corps en nids d'abeilles (1) selon l'une des revendications 1 à 8.

10. Véhicule automobile (21) ayant au moins une unité de traitement de gaz d'échappement (20) selon la revendication 9.
